# FASCICULE DE BREVET EUROPEEN

(11) **EP 0 871 857 B1**
(45) Date de publication et mention de la délivrance du brevet: **12.04.2000**
(21) Numéro de dépôt: 96901379.6
(22) Date de dépôt: 11.01.1996
(51) Int. Cl.: G01N 15/02, G01P 5/00

(54) **DISPOSITIF OPTIQUE DE DETECTION DE CARACTERISTIQUES DE PARTICULES EN MOUVEMENT**
OPTISCHE VORRICHTUNG ZUR BESTIMMUNG VON KARAKTERISTIKEN VON TEILEN IN BEWEGUNG
OPTICAL DEVICE FOR DETECTING THE CHARACTERISTICS OF MOVING PARTICLES

(43) Date de publication de la demande: 21.10.1998
(73) Titulaire: Schneider Electric Industries SA, 92500 Rueil-Malmaison (FR)
(72) Inventeur: BENECH, Pierre, F-38000 Grenoble (FR); CARTELIER, Alain, F-38050 GRENOBLE CEDEX 09 (FR); SCHANEN, Isabelle, F-38050 Grenoble Cedex 09 (FR)
(74) Mandataire: Jouvray, Marie-Andrée
(86) Numéro de dépôt international: FR9600048
(87) Numéro de publication internationale: WO9725607

(56) Documents cités:
- EP-A- 0 184 269
- EP-A- 0 638 797
- WO-A-84/04592
- DE-A- 4 240 769
- GB-A- 2 213 018
- US-A- 4 540 283
- US-A- 5 094 526

## Description

L'invention concerne un dispositif optique de détection de caractéristiques de particules en mouvement dans un fluide s'écoulant le long d'une paroi , dispositif comportant une source lumineuse, des moyens, connectés à la source lumineuse, de production d'au moins deux faisceaux lumineux mutuellement cohérents formant entre eux un angle prédéterminé de manière à former une zone d'interférence constituant un volume de mesure sur le trajet du fluide, des moyens optiques de détection de la lumière diffusée par des particules traversant le volume de mesure, des moyens de détection optoélectroniques, connectés aux moyens optiques de détection et fournissant des signaux électroniques représentatifs de la lumière diffusée, et des moyens de traitement, connectés aux moyens de détection optoélectroniques. Un tel dispositif est connu du document WO-A-84 045 92.

Un vélocimètre laser à effet Doppler permet de mesurer la vitesse de particules submicroniques dans un fluide. Un tel vélocimètre est basé sur la traversée par les particules d'une succession de zones sombres et brillantes équidistantes appartenant à un réseau de franges d'interférence.

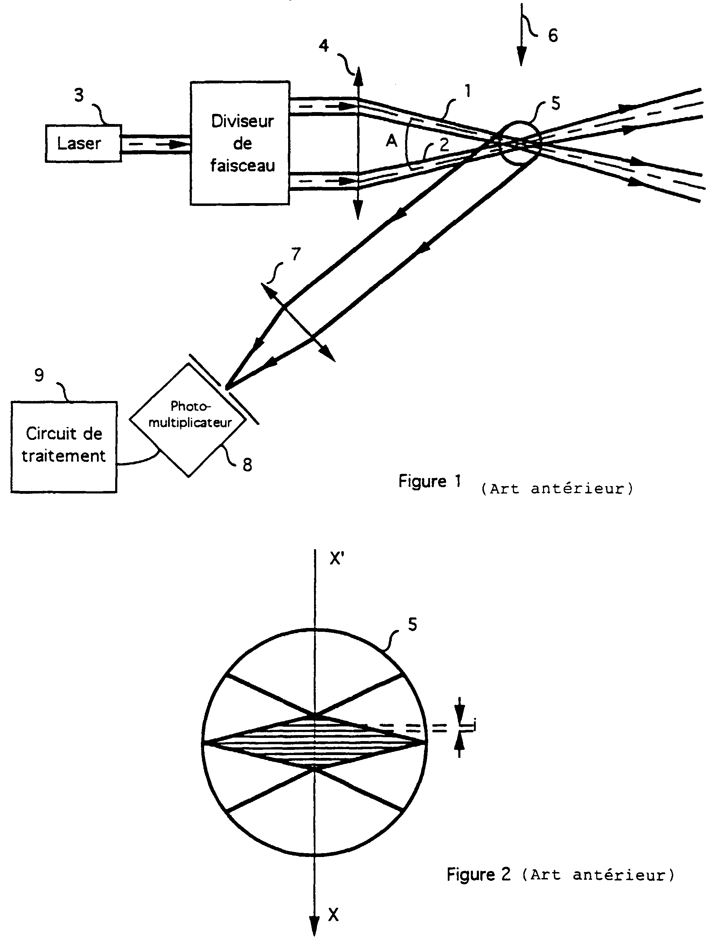

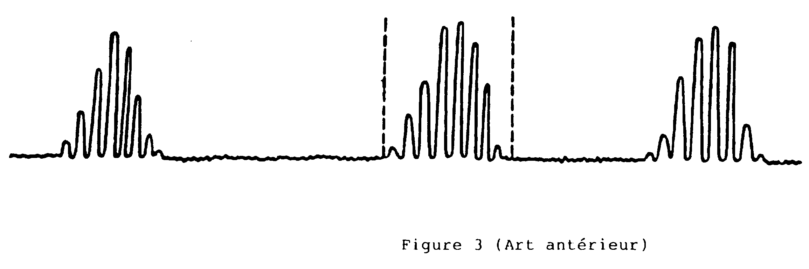

La figure 1 illustre le principe de la vélocimétrie laser à effet Doppler utilisant la méthode des franges. Deux faisceaux lumineux cohérents 1 et 2, provenant d'un même laser 3, se croisent au foyer d'une lentille convergente 4, à l'intérieur d'un volume de mesure 5. La figure 2 représente plus en détail le volume de mesure 5. A l'intérieur du volume de mesure 5 apparaît un système de franges d'interférence disposées suivant des plans équidistants, parallèles à la bissectrice intérieure des deux faisceaux 1 et 2. La distance entre deux plans successifs est l'interfrange i. Une particule, entraînée par un fluide en déplacement perpendiculairement aux franges (axe X'X de la figure 2, flèche 6 de la figure 1), traverse le volume de mesure 5 et passe successivement dans les franges sombres et brillantes. Le flux lumineux diffusé par une particule est modulé à une fréquence proportionnelle à sa vitesse de déplacement. La lumière diffusée par une particule est recueillie par un dispositif de détection optique. La lumière diffusée est généralement mesurée par rétro-diffusion, c'est-à-dire du côté de la source d'émission constituée par le laser 3, comme représenté à la figure 1. Le dispositif de détection comporte un objectif 7 d'assez grande ouverture pour recueillir la lumière diffusée par les particules et former l'image du volume de mesure sur un diaphragme situé devant un photo-multiplicateur 8. Celui-ci fournit à un circuit électronique de traitement 9 des signaux électriques représentatifs de la lumière diffusée par les particules. Les signaux fournis au circuit de traitement 9 se présentent sous la forme d'une succession de trains de sinusoïdes, comme représenté à la figure 3. Chacun des trains, dont l'un est représenté entre deux lignes pointillées, est dû au passage d'une particule dans le volume de mesure 5. La fréquence d'un train de sinusoïdes est représentative de la vitesse de la particule correspondante dans le volume de mesure. Le circuit de traitement effectue une analyse en fréquence des signaux. Les techniques de traitement connues utilisent l'analyse spectrale, les suiveurs de fréquence ou la corrélation d'images. Ces diverses techniques permettent d'obtenir des valeurs moyennes de la vitesse d'une particule. Des techniques de comptage permettent, quant à elles, d'obtenir des valeurs instantanées de la vitesse d'une particule.

La vélocimétrie laser à effet Doppler reste jusqu'ici réservée aux mesures de laboratoire. Les vélocimètres connus, sont coûteux et nécessitent des réglages difficiles, notamment le réglage de l'angle A (figure 1) des faisceaux 1 et 2. En effet, une modification de l'angle A modifie l'interfrange i et, en conséquence, la fréquence des signaux mesurés. Le dispositif de détection optique doit lui aussi être soigneusement aligné.

Jusqu'ici on a plus particulièrement utilisé le vélocimètre laser à effet Doppler pour la mesure de vitesse de particules dans un fluide ou, indirectement, pour la mesure de frottement, à proximité d'une paroi. Avec les vélocimètres connus, il est nécessaire qu'une section de la paroi soit transparente. Les faisceaux lumineux arrivent sur la paroi avec une faible incidence et les signaux recueillis sont très fortement bruités en raison des réflexions de lumière sur les parois. Seuls des réglages optiques longs et délicats, impraticables en milieu industriel, permettent, en laboratoire, d'obtenir des rapports signal/bruit acceptables.

L'invention a pour but un dispositif optique de détection de caractéristiques de particules en mouvement, peu coûteux et réalisable industriellement.

Selon l'invention, ce but est atteint par le fait, que les moyens de production de faisceaux comportent au moins une paire de deux guides optiques émetteurs, les moyens optiques de détection comportent au moins un guide optique récepteur comportant une extrémité d'entrée ayant un axe passant par le centre du volume de mesure, lesdits guides émetteurs et récepteurs étant réalisés sur un substrat unique , par des techniques d'optique intégrée, la géométrie des guides émetteurs étant telle que le volume de mesure soit disposé à l'extérieur du substrat, à une distance prédéterminée d'une face du substrat, le substrat étant monté dans un support destiné à être fixé dans un orifice de la paroi de manière à ce que ladite face du substrat soit en contact avec le fluide. Ainsi le dispositif utilise le principe de la vélocimétrie laser à effet Doppler, et comporte un système optique entièrement intégré destiné à être implanté dans une paroi qui peut être opaque.

Selon un développement de l'invention, le substrat comporte un guide plan entre les guides optiques émetteurs et ladite face du substrat.

Les faisceaux produits par les guides optiques émetteurs peuvent être des faisceaux parallèles, obtenus par une transition adiabatique formée à l'extrémité des guides émetteurs, ou des faisceaux convergents.

D'autres avantages et caractéristiques qui en découlent ressortiront plus clairement de la description suivante de différents modes de réalisation donnés à titre d'exemples non limitatifs et représentés aux dessins annexés dans lesquels :

La figure 1 représente un vélocimètre laser à effet Doppler selon l'art antérieur.

La figure 2 représente plus en détail le volume de mesure du vélocimètre de la figure 1.

La figure 3 représente les signaux transmis au circuit électronique de traitement du vélocimètre selon la figure 1.

La figure 4 représente, de façon schématique, un dispositif selon l'invention comportant une tête optique implantée dans une paroi opaque.

Les figures 5 à 8 et 10 représentent divers modes particuliers de réalisation de la tête optique du dispositif selon la figure 4.

La figure 9 illustre un masque destiné à fabriquer une tête optique selon la figure 8.

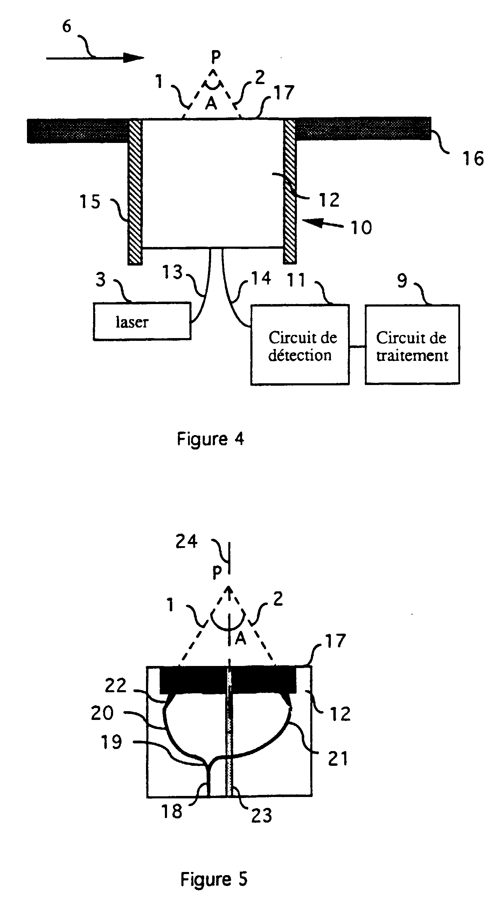

Le dispositif selon la figure 4 comporte une tête optique 10 connectée à un laser 3 et à un circuit de détection optoélectronique 11. Le circuit 11 est connecté au circuit de traitement 9.

La tête optique 10 est essentiellement constituée par un substrat 12 sur lequel des guides optiques, ou micro-guides, sont formés par des techniques d'optique intégrée. Des guides optiques émetteurs sont connectés par une fibre optique 13 à une source optique, constituée par exemple par un laser 3. Ils sont conçus de manière à fournir deux faisceaux optiques cohérents 1 et 2, qui convergent en un point de mesure P situé à l'extérieur du substrat, pour former en ce point des franges d'interférence stables. L'interfrange i est définie par la longueur d'onde du laser et par l'angle A des faisceaux 1 et 2. Des guides optiques récepteurs transmettent au circuit de détection 11, par l'intermédiaire d'une fibre optique 14, des signaux représentatifs de la lumière diffusée par des particules traversant les franges d'interférence.

Des modes particuliers de réalisation des guides optiques seront décrits plus en détail en regard des figures 5 à 9.

Le substrat 12 est de préférence un substrat de verre sur lequel les guides optiques sont réalisés par échange d'ions. A titre d'exemple le substrat 12 peut avoir une longueur de l'ordre de quelques centimètres, 6cm par exemple, une largeur et une épaisseur de l'ordre de quelques centaines de micromètres, par exemple 0,5mm.

Le substrat est porté par un support 15 de manière à former la tête optique 10, compacte et étanche, qui peut être implantée dans une paroi 16. Le dispositif permet ainsi d'étudier des particules en déplacement dans un fluide s'écoulant (flèche 6) le long de la paroi 16. Le volume de mesure, qui est assimilé à un point P sur la figure, est défini par les faisceaux 1 et 2. La position du point P par rapport à la face 17 du substrat 12 en contact avec le fluide est déterminée avec précision par la géométrie des guides optiques implantés dans le substrat. Cette position est définie par l'angle A et par la distance séparant les points de sortie des faisceaux 1 et 2 du substrat. Le substrat est monté dans le support 15 de manière à ce que sa face 17 soit en contact avec le fluide, de préférence alignée avec la face interne de la paroi 16. La position du point de mesure P est ainsi définie avec précision et il est possible de s'approcher très près de la paroi 16, à moins d'une centaine de micromètres, tout en conservant une bonne qualité de signal.

La figure 5 illustre la disposition des guides sur le substrat 12 selon un mode particulier de réalisation. Un guide 18, guide émetteur d'entrée, est formé sur le substrat. Un séparateur de faisceau 19, constitué par une jonction Y, le divise en une paire de deux guides émetteurs 20 et 21. Une transition adiabatique 22 est réalisée à l'extrémité du guide 20 débouchant sur la face 17. Cette transition adiabatique élargit le faisceau transmis par le guide 20 de manière à ce que le faisceau lumineux 1 soit un faisceau parallèle. Une transition adiabatique est également réalisée à l'extrémité du guide 21 de manière à former un faisceau lumineux 2 parallèle.

Les extrémités des guides 20 et 21 sont inclinées l'une par rapport à l'autre, de manière à ce que les faisceaux 1 et 2 convergent en un point P prédéterminé, situé à l'extérieur du substrat, en faisant entre eux un angle A prédéterminé.

Sur la figure 5, un guide récepteur 23 est formé sur le substrat 12. Il comporte une première extrémité, d'entrée, qui débouche sur la face 17 du substrat de manière à ce que l'axe 24 de cette première extrémité passe par le point de mesure P. Une seconde extrémité, de sortie, du guide 23 est destinée à être connectée au circuit de détection 11. La quantité de lumière diffusée par une particule traversant les franges d'interférences au point P est très faible, par exemple de l'ordre de quelques nanowatts pour un laser d'un watt. Il est donc souhaitable de recevoir dans le guide récepteur 23 le maximum de lumière pour faciliter le traitement ultérieur des signaux.

Sur la figure 5 le guide 23 est perpendiculaire à la face 17 du substrat de manière à optimiser la quantité de lumière reçue. La largeur du guide 23 est déterminée de manière à recevoir une quantité de lumière maximale, tout en délimitant la portion du volume de mesure examinée.

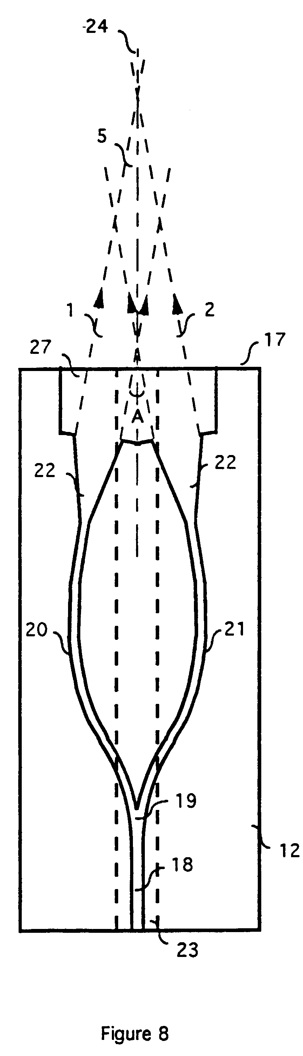

Sur la figure 5 le guide 23 est rectiligne. Il peut être formé dans le même plan que les guides 20 et 21 ou dans un plan différent (figure 8).

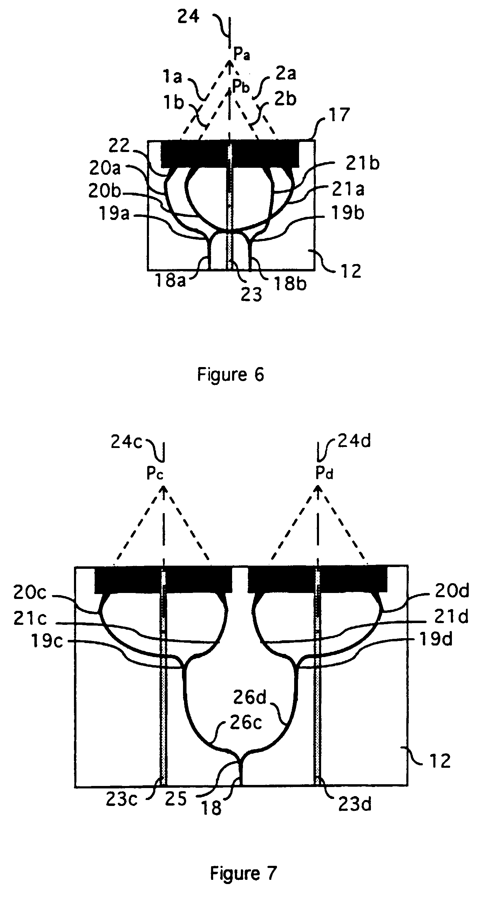

Sur la figure 6 deux paires de guides émetteurs définissent deux points de mesure Pa et Pb alignés sur l'axe 24 de l'extrémité d'entrée du guide récepteur 23. Chacun des points de mesure est défini, comme sur la figure 5, par un guide émetteur d'entrée, respectivement 18a et 18b, divisé (jonctions 19a et 19b) en une paire de deux guides émetteurs (20a et 21a; 20b et 21b) dont les extrémités sont élargies, en 22, pour former des faisceaux parallèles (1a et 2a; 1b et 2b). Le guide récepteur 23 est unique et permet d'observer les deux points de mesure Pa et Pb. Pour permettre de différencier les signaux provenant des deux points de mesure, ceux-ci sont illuminés séquentiellement. Les signaux lumineux appliqués respectivement aux guides émetteur d'entrée 18a et 18b sont par exemple multiplexés. Le multiplexage peut être effectué au niveau de la source optique, qui comporte alors deux sorties respectivement connectées par deux fibres optiques distinctes aux guides 18a et 18b et activées séquentiellement.

Sur la figure 7, deux paires de guides émetteurs définissent deux points de mesure, Pc et Pd, décalés latéralement. Les paires de guides émetteurs comportent un guide d'entrée commun 18. Une jonction Y 25 divise le guide 18 en deux guides intermédiaires 26c et 26d. Chaque guide intermédiaire est ensuite divisé par une jonction Y correspondante, 19c ou 19d, en une paire de deux guides émetteurs (20c et 21c ou 20d et 21d) définissant un point de mesure (Pc ou Pd). Deux guides récepteurs 23c et 23d sont disposés de manière à recevoir la lumière diffusée respectivement aux points Pc et Pd. L'axe 24c de l'extrémité d'entrée du guide récepteur 23c passe par le point Pc et l'axe 24d de l'extrémité d'entrée du guide récepteur 23d passe par le point Pd. Sur le figure 7, les signaux provenant des points Pc et Pd sont recueillis séparément. Si les guides récepteurs 23c et 23d sont connectés séparément au circuit de détection 11, un multiplexage électronique peut être effectué au niveau du circuit de détection 11.

Selon une variante de réalisation non représentée, le multiplexage de faisceaux émetteurs peut être réalisé dans la tête optique 10 elle-même. Pour cela un modulateur, ou commutateur, optique est disposé sur le trajet de chaque paire de guides émetteurs. Un tel modulateur est par exemple formé par un dépôt de cristaux liquides ou par procédé thermooptique lorsque le substrat 12 est un substrat de verre.

Bien entendu, il est possible de former sur un même substrat 12 plus de deux paires de guides émetteurs, de manière à définir une pluralité de points de mesure disposés à des emplacement prédéterminés par rapport à la face 17 du substrat.

La figure 8 représente, à une échelle plus agrandie, les faisceaux parallèles 1 et 2 qui convergent de manière à définir le volume de mesure 5 dans lequel se forme les franges d'interférence. Dans le mode de réalisation particulier de la figure 8, les guides émetteurs sont symétriques par rapport à l'axe 24 du guide récepteur 23. Les transitions adiabatiques des extrémités des faisceaux 20 et 21 forment les faisceaux parallèles 1 et 2. Un guide plan 27 de sortie est formé à la sortie des transitions adiabatiques 22 jusqu'à la face 17, de manière à ce que les faisceaux se propagent librement dans le substrat avant d'interférer à l'extérieur du substrat dans le volume 5. L'angle A est défini par la géométrie des extrémités des guides 20, 21 et de leurs transitions 22.

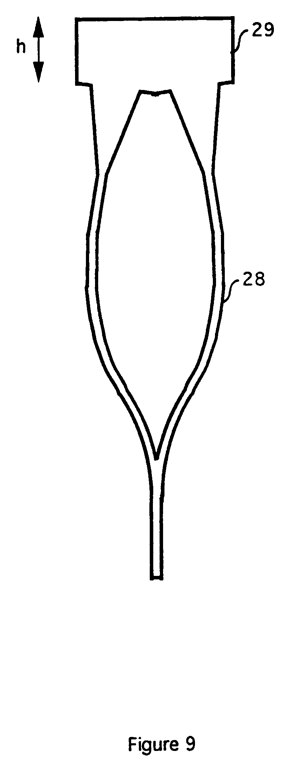

Un masque 28 représenté à la figure 9 permet de reproduire très précisément les guides émetteurs de la tête optique de la figure 8. Le masque reproduit très exactement la géométrie des guides 18, 20 et 21 et des transitions adiabatiques 22. Il est terminé par une partie plane destinée à former le guide plan 27. Cette partie à une hauteur h telle que l'interférence des faisceaux 1 et 2 se réalise à l'extérieur du guide plan 27. Lors de la fabrication de la tête optique, le masque est disposé sur le substrat puis retiré après implantation des ions. Le substrat 12 est scié et poli dans la partie formant le guide plan 27 de manière à former la face 17 à une distance prédéterminée du volume de mesure 5. Il est ainsi possible, à partir d'un même masque, de former des têtes optiques définissant des points de mesure à des distances différentes de la face 17.

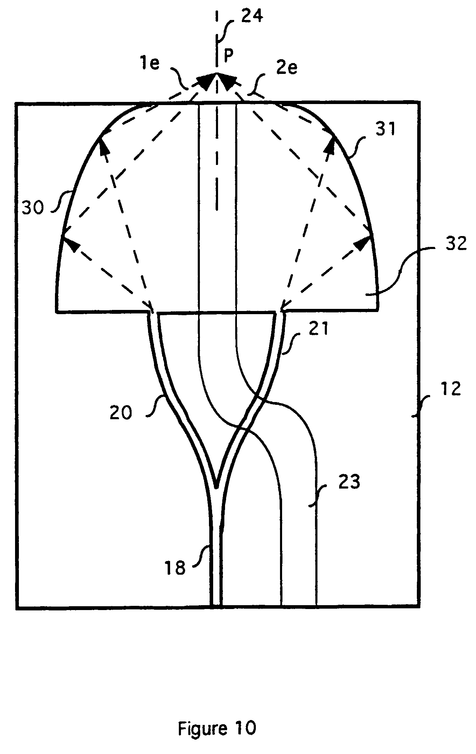

Dans le mode de réalisation particulier représenté à la figure 10, le volume de mesure, au point P, est défini par l'intermédiaire de deux faisceaux convergents le et 2e qui se croisent au point P. Le volume de mesure peut ainsi être plus réduit que lors de l'utilisation de faisceaux parallèles des modes de réalisation précédemment décrits. A titre d'exemple, le volume de mesure peut avoir un diamètre de l'ordre de 100 micromètres avec des faisceaux parallèles et peut être de l'ordre de 20 à 30 micromètres avec des faisceaux convergents. Chaque faisceau convergent, le ou 2e, est formé par un miroir courbe, respectivement 30 ou 31, dont le point focal est au point P, au centre du volume de mesure. Le faisceau lumineux sortant du guide 20 est réfléchi par le miroir courbe 30 de manière à former le faisceau convergent le passant par le point P. De même, le faisceau lumineux sortant du guide 21 est réfléchi par le miroir courbe 31 pour former le faisceau convergent 2e passant également par le point P. L'intersection des deux faisceaux au point P forme les franges d'interférence du volume de mesure.

Les miroirs courbes 30 et 31 peuvent être réalisés très simplement en donnant une forme spécifique au bord d'un guide plan 32 de sortie, de manière à assurer une réflexion totale des faisceaux de sortie des guides 20 et 21. Lorsque la technique d'échange d'ions avec un substrat de verre est utilisée, ceci est réalisé très simplement en donnant une forme appropriée au masque dans la partie destinée à former le guide plan de sortie.

Le substrat 12 peut également être un substrat de silicium. Les miroirs courbes 30 et 31 peuvent alors être réalisés par gravure du substrat et métallisation de la face externe des miroirs.

Sur la figure 10, le guide émetteur d'entrée 18 est placé dans l'axe de symétrie du substrat 12, confondu avec l'axe 24 de l'extrémité d'entrée du guide récepteur 23. Celui-ci pourrait, comme sur la figure 8 être rectiligne, disposé dans un autre plan du substrat 12 que les guides émetteurs. Sur la figure 10, il est situé dans le même plan, mais son extrémité de sortie est décalée pour permettre une connexion au circuit de détection 11.

Les fibres 13 et 14 (figure 4), connectées respectivement à l'entrée du guide émetteur 18 et à la sortie du guide récepteur 23, peuvent être connectées aux micro-guides par collage.

L'utilisation d'un substrat du verre est particulièrement avantageux car il a une très faible atténuation intrinsèque, est peu coûteux et disponible en grande taille, ce qui permet de concevoir des dispositifs de plusieurs centimètres de longueur. De plus, la technique d'échange d'ions pour la réalisation des micro-guides, avec utilisation de masque, permet une reproduction facile et très précise d'un modèle prédéterminé.

Le réseau de franges d'interférences est caractérisé par l'écartement spatial des franges qui dépend à la fois de la longueur d'onde du faisceau lumineux d'entrée fourni par le laser et de l'inclinaison des axes des faisceaux lumineux 1 et 2 délimitant le volume de mesure.

La position des franges d'interférences dépend d'un éventuel déphasage existant entre les deux bras de l'interféromètre constitué par les guides 20, 21. Dans les figures 5 à 10, les bras (guides 20, 21) sont égaux (fig. 8 et 10) ou sensiblement égaux (fig. 5 à 7) et les franges sont pratiquement centrées par rapport au volume de mesure. Il est possible de prévoir un déphasage entre les deux bras, soit en réalisant deux bras de longueur très inégale, soit par introduction d'un déphaseur sur l'un des bras. Dans ce cas les franges sont décalées. Une modulation en courant du laser 3 ou une variation du déphasage permet alors de faire défiler les franges dans la direction 6 d'écoulement du fluide (figure 4). Ceci peut, si nécessaire, permettre de détecter le signe du sens de l'écoulement.

Dans le circuit de traitement 9, la mesure de la fréquence des signaux à l'intérieur d'un train de sinusoïdes (figure 3) permet d'obtenir une grandeur représentative de la vitesse des particules en déplacement dans le volume de mesure 5. La fréquence des trains de sinusoïdes peut être utilisée pour une mesure du nombre de particules. Par ailleurs, l'enveloppe d'un train de sinusoïdes est représentative de la taille de la particule correspondante. Le traitement des données peut se faire de toute manière connue et ne sera pas explicité plus en détail.

Le dispositif intégré ci-dessus permet une mise en place et un démontage aisés dans une paroi 16. De plus, le dispositif est à la fois robuste et compact. Il ne perturbe en rien le fluide en écoulement le long de la paroi 16, car le dispositif ne fait pas saillie à l'intérieur de la paroi. Les signaux lumineux n'ayant pas à traverser la paroi, le dispositif élimine les réflexions parasites qui seraient dues à une telle traversée et les perturbations dues à ces réflexions parasites. De plus aucun réglage optique n'est nécessaire, ce qui permet une utilisation très facile en milieu industriel.

Un tel dispositif est plus particulièrement adapté à la détermination de la vitesse, de la taille et du nombre de particules en déplacement dans un liquide. Des applications sont envisageables par exemple dans l'agro-alimentaire (ex : bulles de champagne), en chimie et en biologie.

L'angle A des faisceaux 1 et 2, dont dépend l'interfrange i, est prédéterminé en tenant compte de l'application envisagée et notamment de la taille des particules à examiner.

## Revendications

1. Dispositif optique de détection de caractéristiques de particules en mouvement dans un fluide s'écoulant le long d'une paroi (16), dispositif comportant une source lumineuse (3), des moyens, connectés à la source lumineuse, de production d'au moins deux faisceaux lumineux (1, 2) mutuellement cohérents formant entre eux un angle prédéterminé (A) de manière à former une zone d'interférence constituant un volume de mesure (5, P,) sur le trajet (6) du fluide, des moyens optiques (23) de détection de la lumière diffusée par des particules traversant le volume de mesure (5), des moyens (11) de détection optoélectroniques, connectés aux moyens optiques de détection et fournissant des signaux électroniques représentatifs de la lumière diffusée, et des moyens (9) de traitement, connectés aux moyens de détection optoélectroniques, dispositif caractérisé en ce que les moyens de production de faisceaux comportent au moins une paire de deux guides optiques émetteurs (20, 21), les moyens optiques de détection comportent au moins un guide optique récepteur (23) comportant une extrémité d'entrée ayant un axe (24) passant par le centre du volume de mesure (5, P), lesdits guides émetteurs et récepteurs étant réalisés sur un substrat unique (12), par des techniques d'optique intégrée, la géométrie des guides émetteurs étant telle que le volume de mesure (5, P) soit disposé à l'extérieur du substrat, à un distance prédéterminée d'une face (17) du substrat, le substrat étant monté dans un support (15) destiné à être fixé dans un orifice de la paroi (16) de manière à ce que ladite face (17) du substrat soit en contact avec le fluide.

2. Dispositif selon la revendication 1, caractérisé en ce que le substrat (12) comporte un guide plan (27, 32) entre les guides optiques émetteurs (20, 21) et ladite face (17) du substrat.

3. Dispositif selon l'une des revendications 1 et 2, caractérisé en ce que les guides optiques émetteurs (20, 21) comportent chacun, à une extrémité, une transition adiabatique (22) constituée par un élargissement de l'extrémité du guide optique émetteur (20, 21) de manière à former des faisceaux (1, 2) parallèles.

4. Dispositif selon la revendication 2, caractérisé en ce que le guide plan comporte des moyens de formation de faisceaux (1, 2) convergents.

5. Dispositif selon la revendication 4, caractérisé en ce que les moyens de formation de faisceaux convergents comportent des miroirs courbes (30, 31) ayant des points focaux au centre du volume de mesure (5, P).

6. Dispositif selon l'une quelconque des revendications 1 à 5 caractérisé en ce que le substrat (12) comporte une pluralité de paires de guides optiques émetteurs de manière à définir une pluralité de volumes de mesure (Pa, Pb ; Pc, Pd)

7. Dispositif selon la revendication 6 caractérisé en ce que les volumes de mesure (Pa, Pb) sont alignés avec l'axe (24) de l'extrémité d'entrée d'un guide récepteur unique (24).

8. Dispositif selon la revendication 6 caractérisé en ce que les volumes de mesure (Pc, Pd) sont décalés latéralement, le substrat (12) comportant une pluralité de guides récepteurs associés (23c, 23d) décalés latéralement et ayant des axes (24c, 24d) passant respectivement par le centre du volume de mesure associé.

9. Dispositif selon l'une quelconque des revendication 1 à 8, caractérisé en ce que les guides optiques récepteurs (23) sont réalisés dans le substrat (12) dans un plan différent des guides optiques émetteurs (20, 21).

10. Dispositif selon l'une quelconque des revendications 1 à 9, caractérisé en ce qu'il comporte des moyens produisant un défilement des franges d'interférence dans la zone d'interférence.

## Patentansprüche

1. Optische Anordnung zur Erfassung von Eigenschaften bewegter Teilchen in einem, an einer Wand (16) entlangströmenden Fluid, welche Anordnung eine Lichtquelle (3), mit der Lichtquelle verbundene Mittel zur Erzeugung von mindestens zwei wechselseitig kohärenten Lichtstrahlenbündeln (1, 2), die in einem bestimmten Winkel (A) zueinander verlaufen, so daß zwischen ihnen ein, eine Meßzone (5, P) im Strömungsweg (6) des Fluids bildender Interferenzbereich entsteht, optische Mittel (23) zur Erfassung des Lichts, das durch die die Meßzone (5) durchlaufenden Teilchen abgestrahlt wird, mit den optischen Erfassungsmitteln verbundene optoelektronische Erfassungsmittel (11) zur Bereitstellung von, das abgestrahlte Licht abbildenden elektronischen Signalen sowie an die optoelektronischen Erfassungsmittel angeschlossene Verarbeitungsmittel (9) umfaßt und dadurch gekennzeichnet ist, daß die Mittel zur Erzeugung von Strahlenbündeln mindestens zwei Sende-Lichtwellenleiter (20, 21) und die optischen Erfassungsmittel mindestens einen Empfangs-Lichtwellenleiter (23) mit einem Eingangsende umfassen, dessen Achse (24) durch den Mittelpunkt der Meßzone (5, P) verläuft, wobei die genannten Sende- und Empfangs-Lichtwellenleiter in integrierter Optik im gleichen Substrat (12) ausgebildet sind, die Geometrie der Sende-Lichtwellenleiter so gestaltet ist, daß die Meßzone (5, P) außerhalb des Substrats, in einem bestimmten Abstand von einer Fläche (17) des Substrats liegt, und das Substrat auf einem Träger (15) angeordnet ist, der dazu dient, in einer Öffnung der Wand (16) befestigt zu werden, so daß die genannte Fläche (17) des Substrats mit dem Fluid in Berührung gelangt.

2. Anordnung nach Anspruch 1, dadurch gekennzeichnet, daß das Substrat (12) einen zwischen den Sende-Lichtwellenleitern (20, 21) und der genannten Fläche (17) des Substrats angeordneten Flachlichtleiter (27, 32) umfaßt.

3. Anordnung nach einem der Ansprüche 1 und 2, dadurch gekennzeichnet, daß die Sende-Lichtwellenleiter (20, 21) jeweils an einem Ende einen adiabatischen Übergang (22) aufweisen, der aus einer Aufweitung des Endes des Sende-Lichtwellenleiters (20, 21) besteht, derart daß sich parallele Strahlenbündel (1, 2) ergeben.

4. Anordnung nach Anspruch 2, dadurch gekennzeichnet, daß der Flachlichtleiter Mittel zur Erzeugung konvergierender Strahlenbündel (1, 2) umfaßt.

5. Anordnung nach Anspruch 4, dadurch gekennzeichnet, daß die Mittel zur Erzeugung konvergierender Strahlenbündel gekrümmte Spiegel (30, 31) umfassen, deren Brennpunkt in der Mitte der Meßzone (5, P) liegt.

6. Anordnung nach irgendeinem der Ansprüche 1 bis 5, dadurch gekennzeichnet, daß das Substrat (12) mehrere Sende-Lichtwellenleiterpaare umfaßt, so daß mehrere Meßzonen (Pa, Pb ; Pc, Pd) definiert werden.

7. Anordnung nach Anspruch 6, dadurch gekennzeichnet, daß die Meßzonen (Pa, Pb) in einer Flucht mit der Achse (24) des Eingangsendes eines einzigen Empfangslichtleiters (23) liegen.

8. Anordnung nach Anspruch 6, dadurch gekennzeichnet, daß die Meßzonen (Pc, Pd) seitlich zueinander versetzt sind, wobei das Substrat (12) mehrere zugeordnete Empfangslichtleiter (23c, 23d) umfaßt, die ebenfalls seitlich zueinander versetzt sind und deren Achsen (24c, 24d) durch die Mitte der jeweils zugeordneten Meßzone verlaufen.

9. Anordnung nach irgendeinem der Ansprüche 1 bis 8, dadurch gekennzeichnet, daß die Empfangs-Lichtwellenleiterpaare (23) in einer anderen Ebene des Substrats ausgebildet sind als die Sende-Lichtwellenleiter (20, 21).

10. Anordnung nach irgendeinem der Ansprüche 1 bis 9, dadurch gekennzeichnet, daß sie Mittel zur dynamischen Verschiebung der Interferenzstreifen im Interferenzbereich umfaßt.

## Claims

1. An optic device for detection of characteristics of particles in movement in a fluid flowing along a wall (16), a device comprising a light source (3), means, connected to the light source, for producing at least two mutually coherent light beams (1, 2) forming between them a predetermined angle (A) so as to form an interference zone constituting a measuring volume (5, P) on the path (6) of the fluid, optic means (23) for detection of the light diffused by particles passing through the measuring volume (5), optoelectronic means (11) for detection, connected to the optic means for detection and supplying electronic signals representative of the light diffused, and processing means (9), connected to the optoelectronic means for detection, a device characterized in that the means for producing light beams comprise at least one pair of two optic emitter guides (20, 21), the optic means for detection comprise at least one optic receiver guide (23) comprising an input end having an axis (24) passing through the centre of the measuring volume (5, P), said emitter and receiver guides being achieved on a single substrate (12) by integrated optics techniques, the geometry of the emitter guides being such that the measuring volume (5, P) is arranged outside the substrate at a preset distance from a face (17) of the substrate, the substrate being mounted in a support (15) designed to be fixed in an orifice of the wall (16) in such a way that said face (17) of the substrate is in contact with the fluid.

2. The device according to claim 1, characterized in that the substrate (12) comprises a flat guide (27, 32) between the optic emitter guides (20, 21) and said face (17) of the substrate.

3. The device according to one of the claims 1 and 2, characterized in that the optic emitter guides (20, 21) each comprise, at one end, an adiabatic transition (22) constituted by a broadening of the end of the optic emitter guide (20, 21) so as to form parallel beams (1, 2).

4. The device according to claim 2, characterized in that the flat guide comprises means for forming convergent beams (1, 2).

5. The device according to claim 4, characterized in that the means for forming convergent beams comprise curved mirrors (30, 31) having focal points at the centre of the measuring volume (5, P).

6. The device according to any one of the claims 1 to 5, characterized in that the substrate (12) comprises a plurality of pairs of optic emitter guides so as to define a plurality of measuring volumes (Pa, Pb ; Pc, Pd).

7. The device according to claim 6, characterized in that the measuring volumes (Pa, Pb) are aligned with the axis (24) of the input end of a single receiver guide (24).

8. The device according to claim 6, characterized in that the measuring volumes (Pc, Pd) are laterally offset, the substrate (12) comprising a plurality of laterally offset associated receiver guides (23c, 23d) having axes (24c, 24d) passing respectively through the centre of the associated measuring volume.

9. The device according to any one of the claims 1 to 8, characterized in that the optic receiver guides (23) are achieved in the substrate (12) in a different plane from the optic emitter guides (20, 21).

10. The device according to any one of the claims 1 to 9, characterized in that it comprises means producing a succession of the interference fringes in the interference zone.
